# EUROPEAN PATENT SPECIFICATION

(11) **EP 2 877 358 B1**
(45) Date of publication and mention of the grant of the patent: **06.07.2016**
(21) Application number: 13735449.4
(22) Date of filing: 27.05.2013
(51) Int. Cl.: B60K 15/03, B60K 13/04

(54) **TANK ASSEMBLY, IN PARTICULAR FOR MOTOR VEHICLES WITH A DIESEL ENGINE**
TANKANORDNUNG, INSBESONDERE FÜR KRAFTFAHRZEUGE MIT DIESELMOTOR
ENSEMBLE DE RÉSERVOIRS, NOTAMMENT POUR VÉHICULES AUTOMOBILES AVEC UN MOTEUR DIESEL

(30) Priority: 26.07.2012 IT TO20120655
(43) Date of publication of application: 03.06.2015
(73) Proprietor: Rototech S.r.l., 10040 San Gillio (Torino) (IT)
(72) Inventor: SANTINON, Alvise, I-10137 Torino (IT)
(74) Representative: Quinterno, Giuseppe
(86) International application number: PCT/IB2013/054359
(87) International publication number: WO 2014/016710

(56) References cited:
- EP-A1- 2 479 393
- WO-A1-2009/131561
- US-A1- 2010 282 758

## Description

The present invention relates to a tank assembly, in particular for a motor vehicle with a diesel engine of the kind defined in the preamble of claim 1.

Such a tank assembly is disclosed in EP 2 479 393 A1.

In industrial and commercial motor-vehicles, in particular lorries, having a diesel engine, such a tank assembly is typically fixed laterally to a longitudinal member of the motor-vehicle frame.

In the tank assemblies of the prior art, the main tank for the diesel fuel and the auxiliary tank for the urea-containing liquid must be made separately and fixed individually to the motor-vehicle frame, in the respective predetermined positions. This results in additional costs, both with regard to management of the main and auxiliary tanks as components, and, in particular, as regards their installation along the assembly lines.

An object of the present invention is to provide a tank assembly which is able to overcome the abovementioned drawbacks of the solutions according to the prior art.

These and further objects are achieved according to the invention by means of a tank assembly having the features defined in claim 1.

In one embodiment, the aforementioned seat formed in the body of the main tank is essentially shaped in the manner of a funnel or hopper and extends between a rear introduction opening of said body and a front outlet opening which is positioned essentially on the opposite side with respect to the longitudinal axis of the body of the main tank.

Advantageously, although not necessarily, the main tank and the auxiliary tank are made by means of the rotational moulding technique.

A tank assembly according to the invention may conveniently have, associated therewith, a single, common, cradle-like support structure including a pair of essentially L-shaped attachment brackets and at least two horizontal stringers which interconnect said attachment brackets.

Conveniently two flexible belts are associated with this support structure, each of them being suitable for enclosing and fastening the body of the main tank between the opposite ends of the aforementioned attachment brackets.

Further characteristic features and advantages of the invention will become clear from the following detailed description provided purely by way of a non-limiting example, with reference to the accompanying drawings in which:
Figure 1 is a front perspective view of a tank assembly according to the invention;
Figure 2 is a rear perspective view of the tank assembly according to Figure 1;
Figure 3 is a rear perspective view, from below, of the tank assembly according to the preceding figures;
Figure 4 is a partially exploded perspective view of a tank assembly according to the invention;
Figure 5 is a perspective view of the tank assembly according to the preceding figures, which shows in a transparent manner the arrangement of the auxiliary tank in the special seat provided in the body of the main tank;
Figure 6 is a cross-sectional view essentially along the line VI-VI of Figure 5;
Figure 7 is a partial perspective view which shows a detail of the system for fixing a tank assembly according to the invention to a common support structure; and
Figure 8 is a perspective view of a belt-guide body used in the fixing system according to Figure 7.

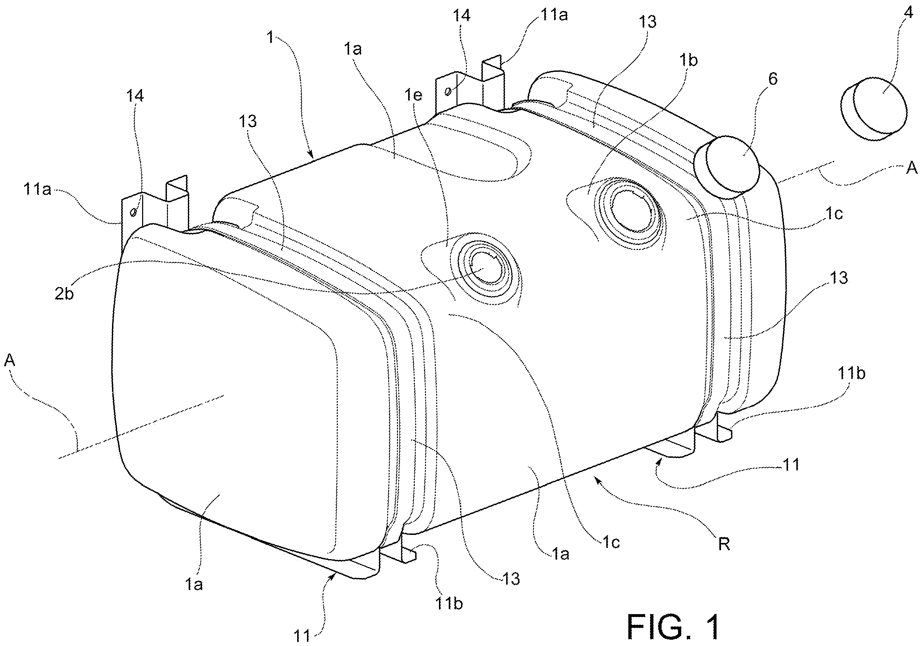

In the drawings, and in particular in Figures 1 to 7, R denotes in its entirety a tank assembly provided in accordance with the present invention.

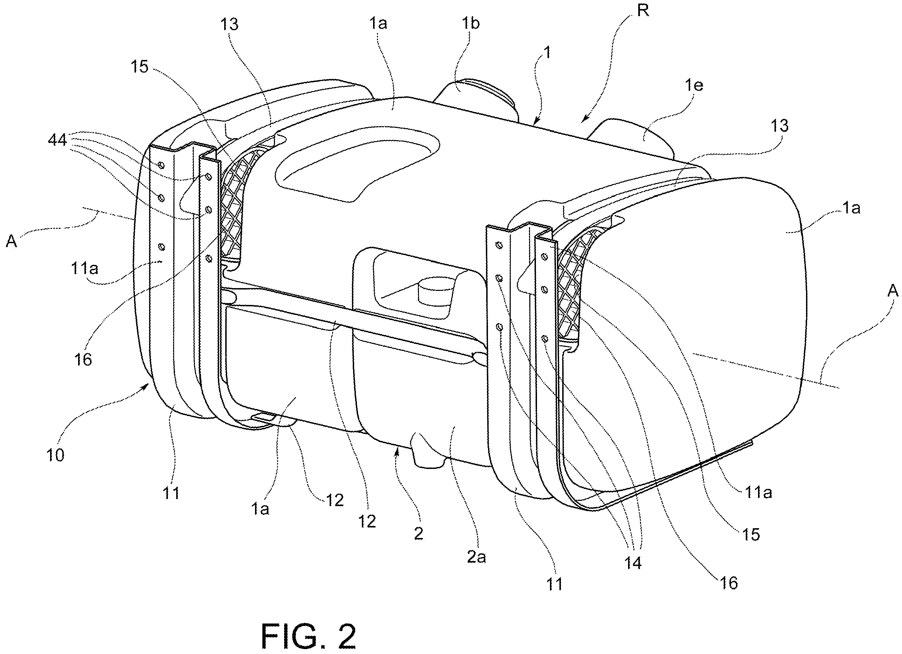

As can be seen more clearly in Figures 2 to 6, in the example of embodiment shown the tank assembly R comprises a main tank 1 and an associated auxiliary tank 2 which are combined with each other.

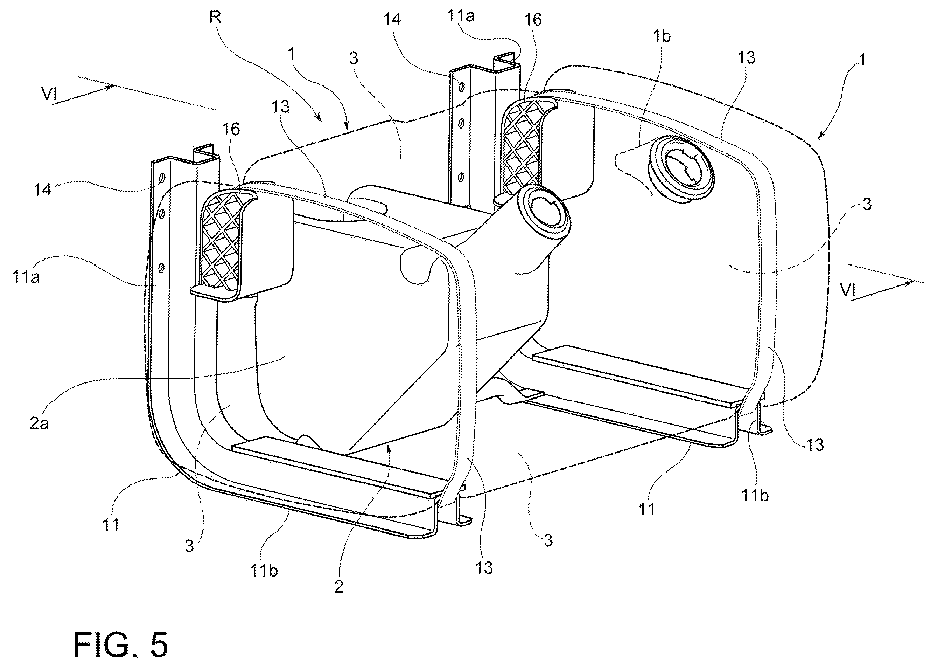

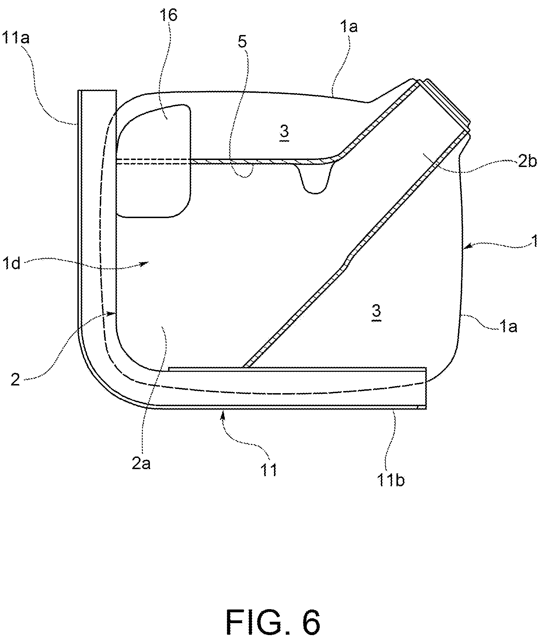

The main tank 1 defines internally a volume - denoted by 3 in Figures 5 and 6 - intended to contain a first liquid, in particular diesel fuel.

The main tank 1 comprises an operationally horizontal body 1a with an elongate shape, in particular a general parallelepiped shape. This body 1a forms an integral mouthpiece 1b with which a removable cap 4 is associated. The mouthpiece 1b is preferably positioned in an upper part of the surface of the body 1a, in particular in a horizontal longitudinal corner 1c.

With reference to Figures 2 to 6, the body 1a of the main tank 1 forms a transverse cavity or recess 5 which is essentially funnel-shaped (see in particular Figure 6) and which extends between a rear opening 1d of the body 1a and an outlet opening 1e positioned substantially on the opposite side with respect to the longitudinal axis A-A of the body 1a of the main tank 1.

Preferably, although not necessarily, the outlet opening 1e is formed in a portion of the upper surface of the body 1a of the main tank, in the horizontal longitudinal corner 1c.

The auxiliary tank 2 has a reduced capacity and is intended to contain a second liquid, in particular an urea-containing liquid. Said auxiliary tank comprises a body 2a having at the top a mouthpiece 2b with which a removable cap 6 is associated (see in particular Figure 1).

As can be seen in Figures 5 and 6, the body 2a of the auxiliary tank 2 has transversely a profile which is contained in the transverse profile of the body 1a of the main tank 1.

The body 2a of the auxiliary tank 2 is inserted, in an extractable manner, in the seat defined in the above-described cavity or recess 5 of the body of the main tank. The mouthpiece 2b of the auxiliary tank 2 emerges, with its distal end, through the opening 1e provided in the body 1a of the main tank.

In the combined condition of the two tanks 1, 2 the assembly R has the external appearance of a single conventional tank.

The tank assembly R in the assembled condition may be handled and managed as a single component.

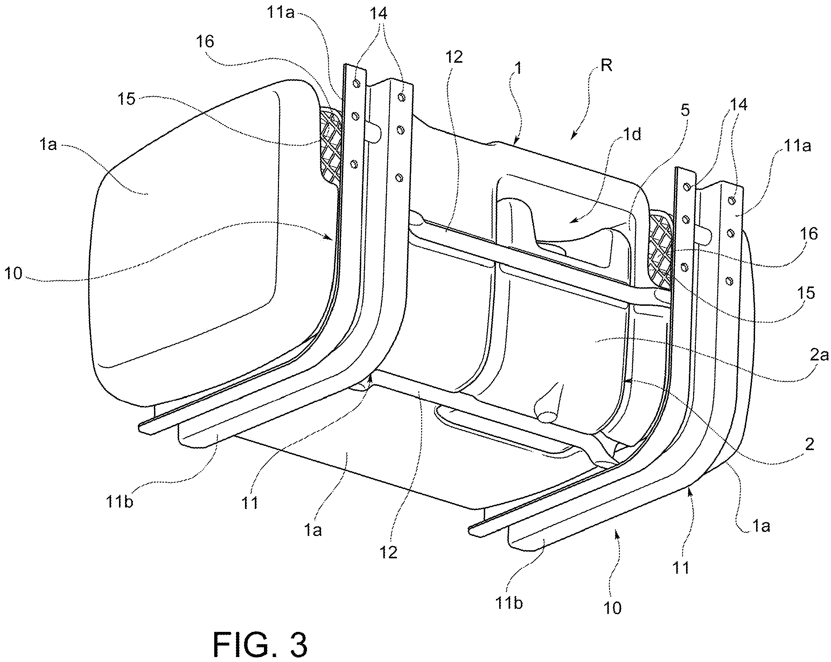

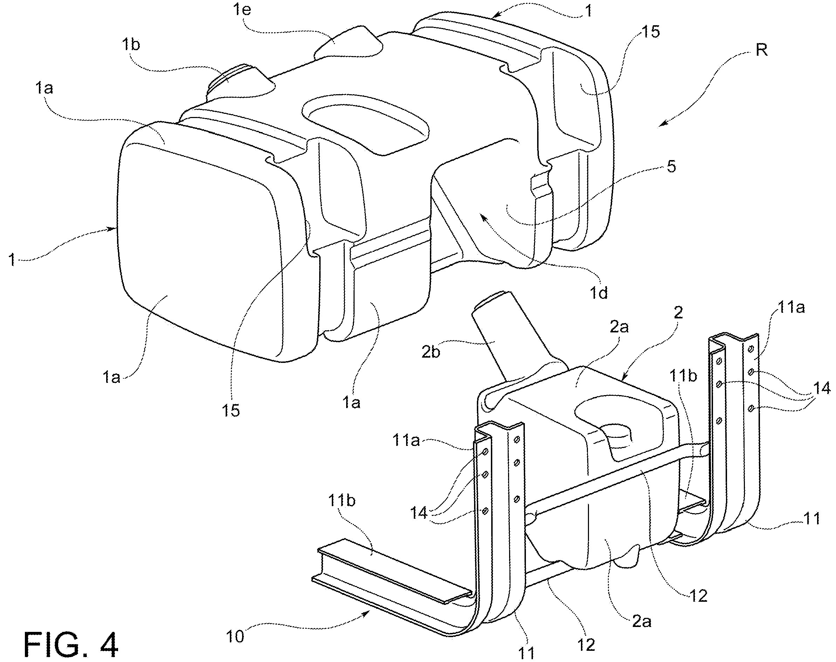

In particular, the assembly R may be fixed to a motor vehicle by means of a single support structure, such as that denoted overall by 10 in the drawings and in particular in Figures 3 and 4.

In the embodiment shown by way of example the common support structure 10 is essentially in the form of a cradle and comprises a pair of essentially L-shaped attachment brackets 11 and two horizontal stringers 12 which interconnect the respective vertical arms 11 a and horizontal arms 11 b thereof.

A pair of flexible belts 13 is associated with this common support structure 10, each of them being suitable for enclosing and fastening the body 1a of the main tank 1 between the opposite ends of a corresponding attachment bracket 11. The ends of the belts 13 may be fastened to the ends of the attachment brackets 11 in one of various ways known per se.

The arrangement is preferably such that, when the assembly R is fastened to the support structure 10, the latter prevents the auxiliary tank 2 from coming out of the main tank 1.

Conveniently the main tank 1 and the auxiliary tank are made separately from each other by means of rotational moulding.

The tanks 1 and 2 are then combined with each other by introducing the auxiliary tank 2 into the cavity or recess 5 through the rear opening 11d of the main tank 1, so that the distal end of the mouthpiece 2b of the auxiliary tank 2 emerges through the opening 1 e of the main tank 1.

The support structure 10, suitably preassembled, is then applied to the tank assembly thus formed, and the set of tanks 1 and 2 is stably secured to said support structure by means of the belts 13.

The tank assembly R may then be mounted, for example on a longitudinal member of the frame of an industrial or commercial motor vehicle, by means of a plurality of fixing members, such as screws or bolts, which are engaged via holes 14 provided in the flanges of the vertical sections 11a of the brackets 11.

For engagement and tightening of the fixing members it may be convenient, on the assembly line, to use suitable electrical or pneumatic screwing devices.

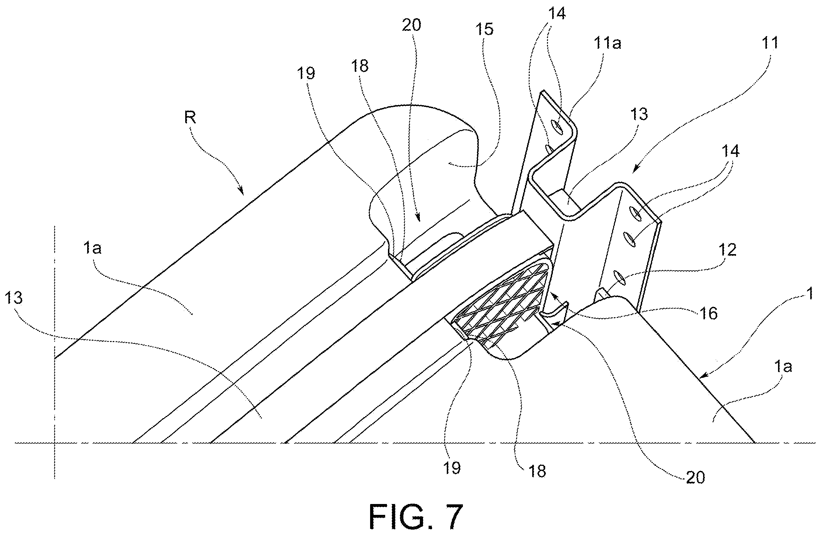

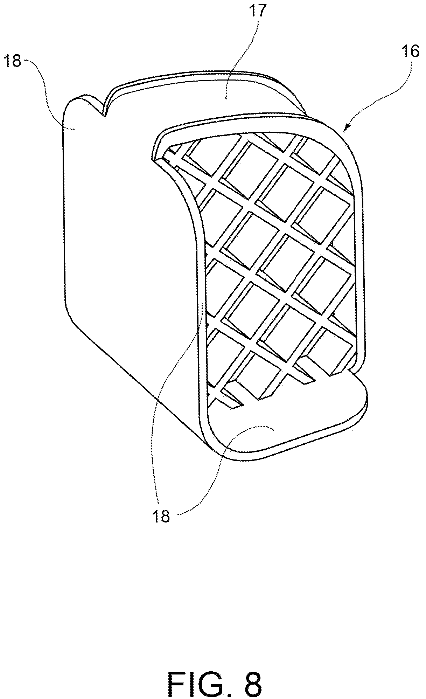

In order to allow these devices access, the rear and top part of the body 1a of the main tank 1 is conveniently provided with two recesses 15 (see in particular Figures 4 and 7) facing the portions of the brackets 11 in which the holes 14 are formed. Respective belt-guide members 16 are conveniently arranged in these recesses, one of these being more clearly visible in Figure 8.

The belt-guide members 16 may be made of plastic, for example by means of injection-moulding, and each have a respective curved seat 17 with an essentially channel-shaped cross-section, for supporting and containing a portion of the corresponding flexible belt 13, as can be seen more clearly in Figure 7.

Each belt-guide member 16 has a pair of shaped flanges 18 with an essentially L-shaped form for insertion into corresponding positioning seats 19 provided in the cavities or recesses 15 of the body of the main tank 1 (Figures 7 and 8).

The portion of each belt-guide member 16 in which the respective seat 17 is formed has a transverse width which is decidedly smaller than that of the corresponding cavity 15 of the main tank 1, such that this portion of each belt-guide member 16 has, defined along its sides, interspaces 20 (Figure 7) into which a screwing device for engaging and tightening screws through the through-holes 14 of the brackets 11 may be introduced and used.

A tank assembly R according to the present invention, conveniently assembled with the respective support structure 10, may be then managed as a single component, this allowing the logistical management and assembly thereof on a motor-vehicle to be drastically simplified.

Obviously, without affecting the principle of the invention, the embodiments and the constructional details may be significantly varied with respect to that described and illustrated purely by way of a non-limiting example, without thereby departing from the scope of the invention as defined in the accompanying claims.

## Claims

1. Tank assembly (R), in particular for a motor-vehicle having a diesel engine, compoising:
a main tank (1) defining a volume (3) intended to contain a first liquid, in particular diesel fuel, and comprising an operationally horizontal body (1a) with an elongate shape, in particular a general parallelepiped shape, having a mouthpiece (1b) with an associated removable cap, preferably positioned in an upper portion of the lateral surface of said body (1a), in particular in a longitudinal horizontal corner (1c) thereof; and
an auxiliary tank (2) with a reduced volume, arranged adjacent to the main tank (1) and intended to contain a second liquid, in particular an urea-containing liquid, and comprising a body (2a) having a mouthpiece (2b) with an associated removable cap (6);
wherein the body (2a) of the auxiliary tank (2) has a transverse profile which is contained, at least in part, in the transverse profile of the body (1a) of the main tank (1) and the body (1a) of the main tank (1) forms a transverse cavity or recess (5) which defines a seat isolated from said volume (3) and in which the body (2a) of the auxiliary tank (2) is inserted in an extractable manner;
the assembly (R) being **characterized in that** said cavity or recess (5) has an outlet opening (1e) through which the mouthpiece (2b) of the auxiliary tank (2) emerges, in a portion of the lateral surface of the body (1a) of the main tank (1), in particular in said longitudinal horizontal corner (1c).

2. Assembly according to Claim 1, wherein said seat (5) formed in the body (1a) of the main tank (1) is essentially funnel-shaped.

3. Assembly according to Claim 1 or Claim 2, wherein said seat (5) of the body (1a) of the main tank (1) extends between a rear introduction opening (1d) and said outlet opening (1e), which is positioned essentially on the opposite side with respect to the longitudinal axis (A-A) of the body (1a) of the main tank (1).

4. Assembly according to one of the preceding claims, wherein the main tank (1) and the auxiliary tank (2) are made by means of rotational moulding.

5. Assembly according to any one of the preceding claims, having, associated therewith, a single, common, cradle-like support structure (10) including a pair of essentially L-shaped attachment brackets (11) and connection means (12) which interconnect said attachment brackets (11).

6. Assembly according to Claim 5, comprising further a pair of flexible belts (13), each of which is suitable for enclosing and fastening the body (1a) of the main tank (1) between the opposite ends (11a, 11b) of said attachment brackets (11).

7. Assembly according to Claim 4 and one of Claims 5 and 6, wherein each attachment bracket (11) has openings (14) for the engagement of members for fixing the support structure (10) to a motor vehicle and wherein the portions of the body (1a) of the main tank (1) facing said openings (14) form respective cavities (15) in which respective belt-guide members (16) for supporting and containing portions of the corresponding flexible belts (13) are positioned, said belt-guide members (16) defining, with respect to opposite walls of said cavities (15), interspaces or gaps (20) suitable for allowing the introduction and the use of devices for applying said fixing members or elements.

8. Assembly according to Claim 7, wherein each belt-guide member (16) is provided with positioning formations (18) arranged in corresponding positioning seats (19) provided in said cavities (15) of the body (1a) of the main tank (1).

## Patentansprüche

1. Tankanordnung (R), insbesondere für ein Kraftfahrzeug mit einem Dieselmotor, umfassend:
einen Haupttank (1), der ein Volumen (3) festlegt und eine erste Flüssigkeit enthalten soll, insbesondere Dieselkraftstoff, und der einen betriebsmäßig horizontalen Körper (1a) mit einer länglichen Form, insbesondere einer allgemeinen Parallelepipedform, umfasst, der eine Öffnung (1b) mit einem dazugehörigen entfernbaren Deckel aufweist, die vorzugsweise in einem oberen Abschnitt der Seitenfläche des Körpers (1a), insbesondere in einer in der Längsrichtung horizontalen Ecke (1c) davon, angeordnet ist, und
einen Hilfstank (2) mit einem verminderten Volumen, der benachbart zu dem Haupttank (1) angeordnet ist und eine zweite Flüssigkeit, insbesondere eine Harnstoff-enthaltende Flüssigkeit, enthalten soll, und der einen Körper (2a) mit einer Öffnung (2b) mit einem dazugehörigen entfernbaren Deckel (6) aufweist,
wobei der Körper (2a) des Hilfstanks (2) ein Querprofil aufweist, das mindestens teilweise in dem Querprofil des Körpers (1a) des Haupttanks (1) enthalten ist und der Körper (1a) des Haupttanks (1) einen in Querrichtung verlaufenden Hohlraum oder eine in Querrichtung verlaufende Aussparung (5) bildet, der oder die einen von dem Volumen (3) isolierte Aufnahme festlegt, und in dem oder welcher der Körper (2a) des Hilfstanks (2) in einer entnehmbaren Weise eingesetzt ist,
wobei die Anordnung (R) **dadurch gekennzeichnet ist, dass** der Hohlraum oder die Aussparung (5) eine Auslassöffnung (1e), durch welche die Öffnung (2b) des Hilfstanks (2) vorragt, in einem Abschnitt der Seitenfläche des Körpers (1a) des Haupttanks (1), insbesondere in der in der Längsrichtung horizontalen Ecke (1c), aufweist.

2. Anordnung nach Anspruch 1, bei der die Aufnahme (5), die in dem Körper (1a) des Haupttanks (1) ausgebildet ist, im Wesentlichen trichterförmig ist.

3. Anordnung nach Anspruch 1 oder Anspruch 2, bei der sich die Aufnahme (5) des Körpers (1a) des Haupttanks (1) zwischen einer hinteren Einführungsöffnung (1d) und der Auslassöffnung (1e) erstreckt, die in Bezug auf die Längsachse (A-A) des Körpers (1a) des Haupttanks (1) im Wesentlichen auf der gegenüber liegenden Seite angeordnet ist.

4. Anordnung nach einem der vorhergehenden Ansprüche, bei welcher der Haupttank (1) und der Hilfstank (2) durch Rotationsformen hergestellt worden sind.

5. Anordnung nach einem der vorhergehenden Ansprüche, an der eine einzelne, gemeinsame wiegenartige Trägerstruktur (10) angebracht ist, die ein Paar von im Wesentlichen L-förmigen Anbringungsklammern (11) und Verbindungsmittel (12) umfasst, welche die Anbringungsklammern (11) verbinden.

6. Anordnung nach Anspruch 5, die ferner ein Paar von flexiblen Bändern (13) umfasst, die jeweils zum Umschließen und Befestigen des Körpers (1a) des Haupttanks (1) zwischen den gegenüber liegenden Enden (11a, 11b) der Anbringungsklammern (11) geeignet sind.

7. Anordnung nach Anspruch 4 und einem der Ansprüche 5 und 6, bei der jede Anbringungsklammer (11) Öffnungen (14) zum Ineingriffnehmen von Elementen zum Befestigen der Trägerstruktur (10) an einem Kraftfahrzeug aufweist und wobei die Abschnitte des Körpers (1a) des Haupttanks (1), die auf die Öffnungen (14) gerichtet sind, jeweilige Hohlräume (15) bilden, in denen jeweilige bandartige Elemente (16) zum Stützen und Aufnehmen von Abschnitten der entsprechenden flexiblen Bänder (13) angeordnet sind, wobei die bandartigen Elemente (16) in Bezug auf gegenüber liegende Wände der Hohlräume (15) Zwischenräume oder Lücken (20) festlegen, die zum Einführen und Verwenden von Vorrichtungen zum Anbringen der Befestigungselemente oder-bauteile geeignet sind.

8. Anordnung nach Anspruch 7, wobei jedes bandartige Element (16) mit Positionierungsstrukturen (18) ausgestattet ist, die in entsprechenden Positionierungsaufnahmen (19) angeordnet sind, die in den Hohlräumen (15) des Körpers (1a) des Haupttanks (1) bereitgestellt sind.

## Revendications

1. Ensemble de réservoirs (R), en particulier pour un véhicule motorisé possédant un moteur diesel, comprenant :
un réservoir principal (1) définissant un volume (3) prévu pour contenir un premier liquide, en particulier un carburant diesel, et comprenant un corps fonctionnellement horizontal (1a) avec une forme allongée, en particulier une forme généralement parallélépipédique, possédant une embouchure (1b) avec un bouchon amovible associé, de préférence positionnée dans une portion supérieure de la surface latérale dudit corps (1a), en particulier dans un coin horizontal longitudinal (1c) de celui-ci ; et
un réservoir auxiliaire (2) avec un volume réduit, agencé de façon adjacente au réservoir principal (1) et prévu pour contenir un second liquide, en particulier un liquide contenant de l'urée, et comprenant un corps (2a) possédant une embouchure (2b) avec un bouchon amovible associé (6) ;
dans lequel le corps (2a) du réservoir auxiliaire (2) possède un profil transversal qui est contenu, au moins en partie, dans le profil transversal du corps (1a) du réservoir principal (1) et le corps (1a) du réservoir principal (1) forme une cavité ou un évidement transversal (5) qui définit un siège isolé dudit volume (3) et dans lequel le corps (2a) du réservoir auxiliaire (2) est inséré de manière extractible ;
l'ensemble (R) étant **caractérisé en ce que** ladite cavité ou ledit évidement (5) possède une ouverture de sortie (1e) à travers laquelle l'embouchure (2b) du réservoir auxiliaire (2) sort, dans une portion de la surface latérale du corps (1a) du réservoir principal (1), en particulier dans ledit coin horizontal longitudinal (1c).

2. Ensemble selon la revendication 1, dans lequel ledit siège (5) formé dans le corps (1a) du réservoir principal (1) présente une forme essentiellement d'entonnoir.

3. Ensemble selon la revendication 1 ou la revendication 2, dans lequel ledit siège (5) du corps (1a) du réservoir principal (1) s'étend entre une ouverture d'introduction arrière (1d) et ladite ouverture de sortie (1e), qui est positionnée essentiellement sur le côté opposé par rapport à l'axe longitudinal (A-A) du corps (1a) du réservoir principal (1).

4. Ensemble selon l'une des revendications précédentes, dans lequel le réservoir principal (1) et le réservoir auxiliaire (2) sont faits au moyen de moulage rotatif.

5. Ensemble selon l'une quelconque des revendications précédentes, possédant, associée à celui-ci, une structure de support, en forme de berceau, commune, unique (10) incluant une paire d'appuis de fixation essentiellement en forme de L (11) et des moyens de raccordement (12) qui raccordent mutuellement lesdits appuis de fixation (11).

6. Ensemble selon la revendication 5, comprenant en outre une paire de courroies flexibles (13), dont chacune est appropriée pour enfermer et fixer le corps (1a) du réservoir principal (1) entre les extrémités opposées (11a, 11b) desdits appuis de fixation (11).

7. Ensemble selon la revendication 4 et l'une des revendications 5 et 6, dans lequel chaque appui de fixation (11) possède des ouvertures (14) pour l'engagement d'organes pour fixer la structure de support (10) à un véhicule motorisé et dans lequel les portions du corps (1a) du réservoir principal (1) faisant face à ladite ouvertures (14) forment des cavités respectives (15) dans lesquelles des organes de guidage de courroie respectifs (16) pour supporter et contenir des portions des courroies flexibles correspondantes (13) sont positionnés, lesdits organes de guidage de courroie (16) définissant, par rapport à des parois opposées desdites cavités (15), des interstices ou écarts (20) appropriés pour permettre l'introduction et l'utilisation de dispositifs pour appliquer lesdits organes ou éléments de fixation.

8. Ensemble selon la revendication 7, dans lequel chaque organe de guidage de courroie (16) est pourvu de formations de positionnement (18) agencées dans des sièges de positionnement correspondants (19) prévus dans lesdites cavités (15) du corps (1a) du réservoir principal (1).
